(19) Europäisches Patentamt
European Patent Office
Office européen des brevets

(11) Publication number: **0 292 760 B1**

(12) # EUROPEAN PATENT SPECIFICATION

(45) Date of publication of patent specification: **11.11.92**

(51) Int. Cl.5: **C08G 77/38**, C08G 77/395

(21) Application number: **88107318.3**

(22) Date of filing: **06.05.88**

(54) **Organopolysiloxanes containing a phospholipid-like structure and a process for their preparation.**

(30) Priority: **07.05.87 JP 111275/87**
**08.05.87 JP 112741/87**

(43) Date of publication of application:
**30.11.88 Bulletin 88/48**

(45) Publication of the grant of the patent:
**11.11.92 Bulletin 92/46**

(84) Designated Contracting States:
**BE DE FR GB**

(56) References cited:
**GB-A- 1 473 211**
**US-A- 2 995 594**

(73) Proprietor: **TORAY SILICONE COMPANY, LIMITED**
**2-3-16, Muro-machi Nihonbashi**
**Chuo-ku Tokyo 103(JP)**

(72) Inventor: **Nakaya, Tadao**
**2-29, 4-chome Kitakasugaoka**
**Ibaraki-shi Osaka Prefecture(JP)**
Inventor: **Imoto, Minoru**
**46, 3-chome Okaminami-machi**
**Hirakata-Shi Osaka Prefecture(JP)**

(74) Representative: **Spott, Gottfried, Dr. et al**
**Patentanwälte Spott und Puschmann**
**Sendlinger-Tor-Platz 11**
**W-8000 München 2(DE)**

EP 0 292 760 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to organopolysiloxanes which contain a phospholipid-like structure, and to a process for their preparation.

Organopolysiloxanes containing various functional groups and processes for their preparation are known in the prior art. These methods generally consist of contacting an unsaturated organic compound containing a functional group such as polyoxyalkylene oxide, cyano, acetoxy groups, or the like, with an organohydrogenpolysiloxane, under the influence of a hydrosilyation catalyst. However, unknown to the are are organopolysiloxanes containing a phospholipid-like structure having the unit formula

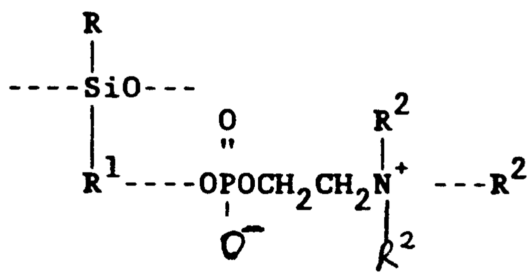

wherein each R is an alkyl radical, each $R^1$ is an alkylene radical containing 3 to 50 carbon atoms, and each $R^2$ is independently selected from the hydrogen atom, alkyl radicals containing 1 to 25 carbon atoms, and a siloxane with the unit formula

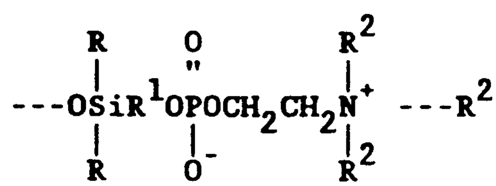

wherein R, $R^1$, and $R^2$ are defined above, and which may contain at least 1 of any of the following: a dialkylsiloxane unit, an alkylhydrogensiloxane unit, a trialkylsiloxy unit, and a dialkylhydrogensiloxy unit. Also unknown to the art are cyclic organopolysiloxanes containing a phospholipid-like structure, having the unit formula:

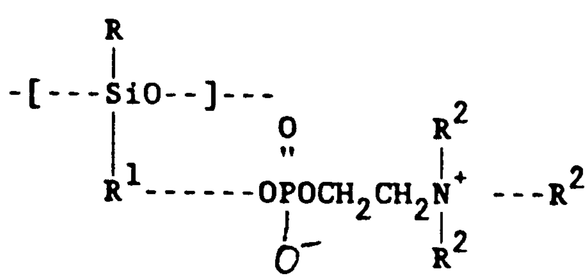

wherein R, $R^1$, and $R^2$ are defined above, and which may contain the dialkylsiloxane unit and/or alkylhydrogensiloxane unit.

One element of the present invention relates to linear organopolysiloxanes containing a phospholipid-like structure, characterized in that they have the following general formula which has at least one group A in each molecule

[I] 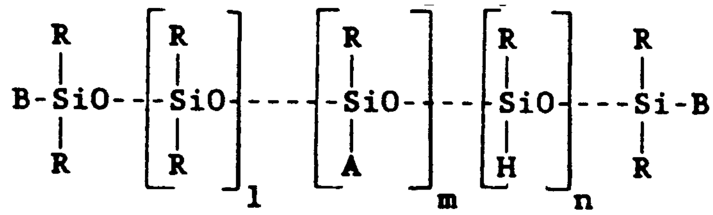

wherein R is an alkyl radical; A is an organic group having the unit formula

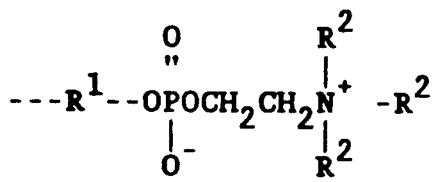

wherein $R^1$ is an alkylene group containing 3 to 50 carbon atoms and each $R^2$ is selected from hydrogen atoms or alkyl groups containing 1 to 25 carbon atoms; B is a group R, the hydrogen atom, or a group A; l, m, and n, each have a value of zero or an integer of at least 1, with the proviso that $l + m + n$ is an integer having a value of 0 to 2,000. A second element of the invention relates to cyclic organopolysiloxanes containing a phospholipid-like structure, characterized in that it has the general formula

[II] 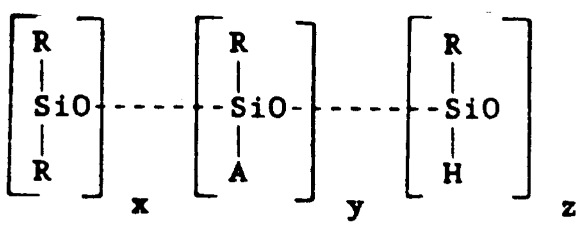

wherein R is an alkyl group, A is an organic group with the unit formula:

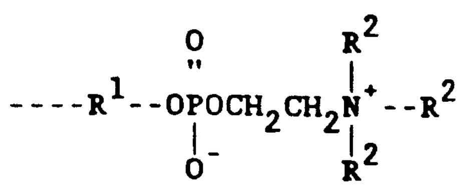

wherein $R^1$ is an alkylene group containing 3 to 50 carbon atoms and each $R^2$ is selected from hydrogen atoms or alkyl groups containing 1 to 25 carbon atoms, x is zero or an integer having a value of at least one, y is an integer having a value of at least one, and z is zero or an integer having a value of at least one, with the proviso that $x + y + z$ is an integer having a value of 3 to 20 and with the further proviso that there is at least one group containing A in each molecule.

The organopolysiloxanes having the general formula (I) are linear, and may contain in the main chain the siloxane unit with the formula

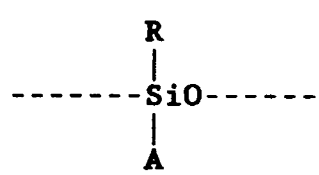

wherein R and A are defined above, and may be endblocked by a siloxane unit with the formula

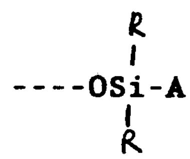

They can also contain the dialkylsiloxane unit or alkylhydrogensiloxane unit or both such siloxane units in the main chain.

When the siloxane unit with the formula

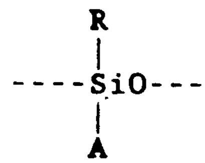

is present in the main chain, the molecular terminal may be a siloxane unit with the formula

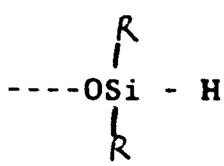

or a siloxane unit with the formula

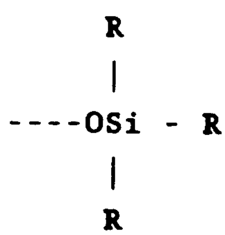

Typical examples of organopolysiloxane with general formula (I) include

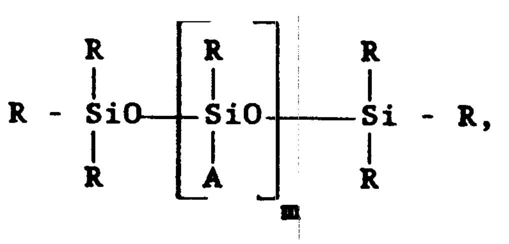
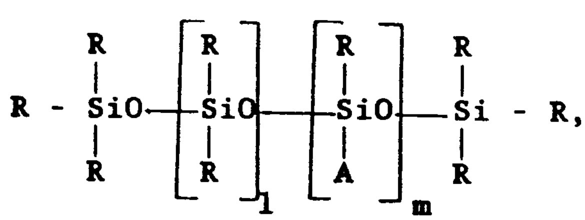

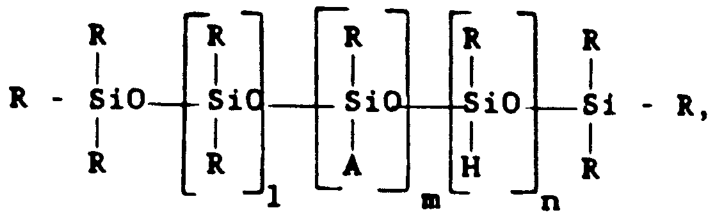

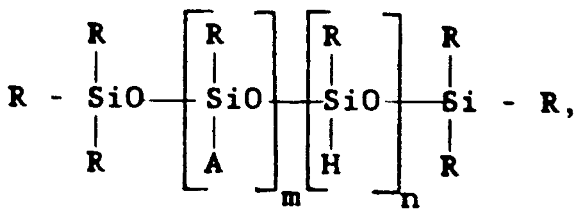

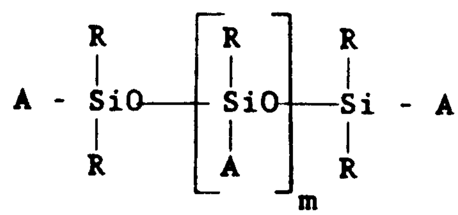

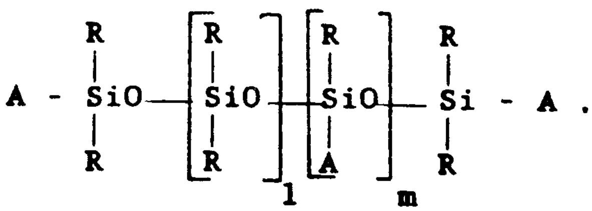

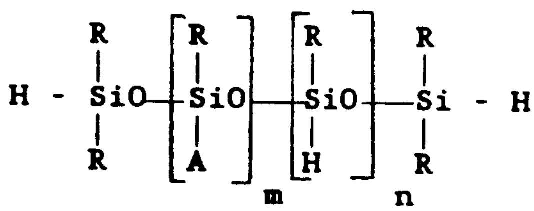

When the dialkylsiloxane unit or alkylhydrogensiloxane unit or both types of siloxane units are present, along with the siloxane unit with the formula

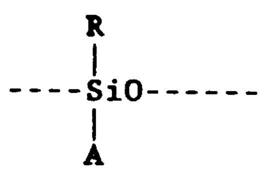

,

these siloxane units are generally randomly arranged. In the general formula (I), l, m, and n are each zero or an integer with a value of at least 1, with the proviso that l + m + n is an integer with a value of 0 to 2,000. Thus, neither l nor m nor n can exceed 2,000. This upper limit of 2,000 on l + m + n is based on limitations on the technology for the synthesis of the precursor alkylhydrogenpolysiloxane starting material for organopolysiloxane with general formula (I).

The organopolysiloxanes with the general formula (II) are cyclic, and contain at least one siloxane unit with the formula

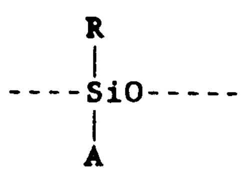

,

and can additionally contain the dialkylsiloxane unit, or the alkylhydrogensiloxane unit, or both the dialkylsiloxane unit and alkylhydrogensiloxane unit.

Typical examples of organopolysiloxane with the general formula (II) include the following:

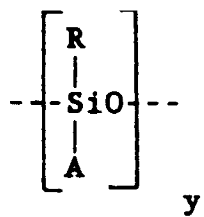

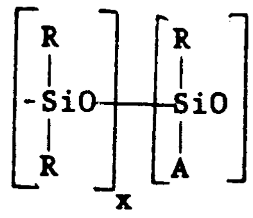

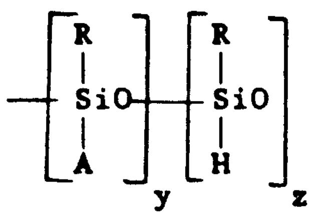

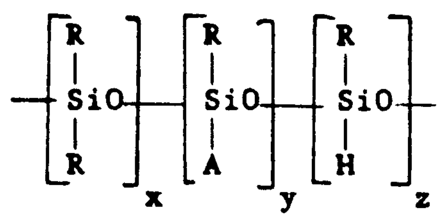

When the dialkylsiloxane unit, alkylhydrogensiloxane unit, or both types of siloxane units are present along with the siloxane unit with the formula:

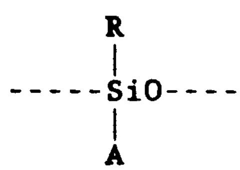

these siloxane units are generally randomly arranged.

In general formula (II), x is zero or an integer with a value of at least 1, y is an integer with a value of at least one, and z is zero or an integer with a value of at least 1, with the proviso that $x + y + z$ is an integer with a value of 3 to 20.

Thus, x will not exceed 19, y will not exceed 20, and z will not exceed 19.

The upper limit of 20 on $x + y + z$ is based on limitations on the technology for the synthesis of the cyclic alkylhydrogenpolysiloxane starting material for organopolysiloxanes with the general formula (II).

With regard to general formulas (I) and (II), R is an alkyl group, and is exemplified by methyl, ethyl, propyl, butyl, hexyl, octyl, and dodecyl. The groups R can be a mixture of different types within a single molecule. R is preferably the methyl group.

The group A is an organic group containing a phospholipid-like structure, and has the following formula.

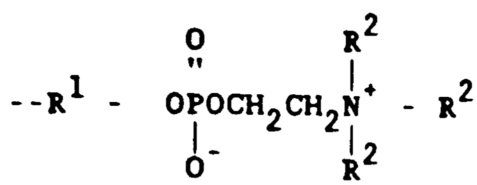 (III)

Wherein $R^1$ is an alkylene group having 3 to 50 carbon atoms, and examples of this alkylene group are propylene, butylene, hexylene, octylene, and dodecylene. The group $R^2$ is the hydrogen atom or an alkyl group having 1 to 25 carbon atoms, and the alkyl group in this case is exemplified as for the group R. It is not necessary that the three groups R bonded to nitrogen be identical.

The linear organopolysiloxane with general formula (I) can be produced by a hydrosilylation reaction, in the presence of a hydrosilylation catalyst, between a compound having the formula:

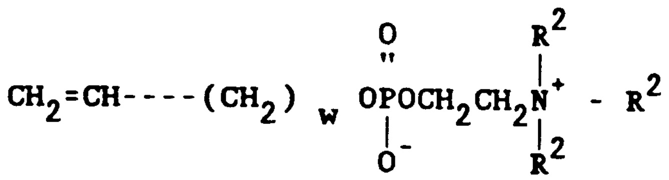 (IV)

wherein w is an integer with a value of 1 to 48 and $R^2$ is defined as above and a trialkylsiloxy-terminated or dialkylhydrogensiloxy-terminated alkylhydrogenpolysiloxane, or a trialkylsiloxy-terminated or dialkylhydrogensiloxy-terminated dialkylsiloxane-alkylhydrogensiloxane copolymer.

Cyclic organopolysiloxane with general formula (II) can be produced by a hydrosilylation reaction, in the presence of a hydrosilylation catalyst, between a cyclic alkylhydrogenpolysiloxane or cyclic dialkylsiloxane-alkylhydrogensiloxane copolymer and a formula (IV) compound.

At this point, when the number of equivalents of vinyl groups in the formula (IV) compound is equal to or exceeds the number of equivalents of hydrosilyl groups in the alkylhydrogenpolysiloxane or dialkylsiloxane-alkylhydrogensiloxane copolymer, one obtains organopolysiloxane with general formula (I) in which n is zero and the group B is not a hydrogen atom, or organopolysiloxane with general formula (II) in which z is zero, that is, organopolysiloxanes lacking the alkylhydrogensiloxane unit.

On the other hand, when the number of equivalents of vinyl groups in the formula (IV) compound is less than the number of equivalents of hydrosilyl groups in the alkylhydrogenpolysiloxane or dialkylsiloxane-alkylhydrogensiloxane copolymer, one obtains organopolysiloxane with general formula (I) in which n is at least 1 and/or B is a hydrogen atom, or organopolysiloxane with general formula (II) in which z is at least 1, that is, organopolysiloxane containing the alkylhydrogensiloxane unit.

Typical examples of the trialkylsiloxy-terminated or dialkylhydrogensiloxy-terminated alkylhydrogenpolysiloxane starting material for the linear organopolysiloxane with general formula (I) include trimethylsiloxy-terminated and dimethylhydrogensiloxy-terminated methylhydrogenpolysiloxanes.

Typical examples of the trialkylsiloxy-terminated or dialkylhydrogensiloxy- terminated dialkylsiloxane-alkylhydrogensiloxane copolymers include trimethylsiloxy-terminated and dimethylhydrogensiloxy-terminated dimethylsiloxane-methylhydrogensiloxane copolymers.

Tetramethyltetrahydrogencyclotetrasiloxane is a typical example of the cyclic alkylhydrogenpolysiloxane starting material for the cyclic organopolysiloxane with general formula (II). Likewise, the compound with the formula

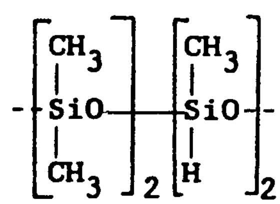

is a typical example of the cyclic dialkylsiloxane-alkylhydrogensiloxane copolymer starting material.
Other examples are the above-mentioned polysiloxanes in which a portion of the methyl groups has been replaced by other alkyl groups.

Specific examples of formula (IV) compounds are as follows:

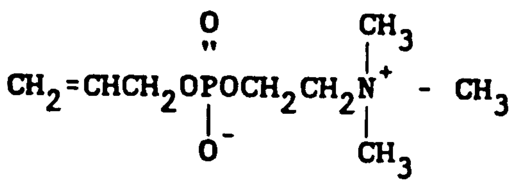

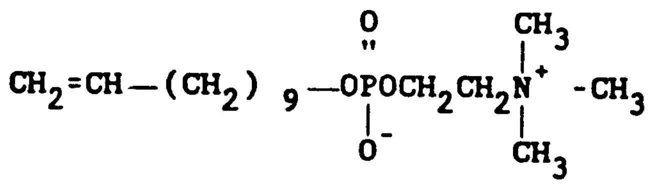

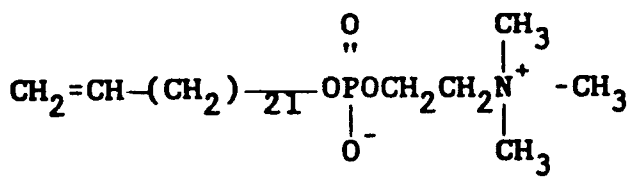

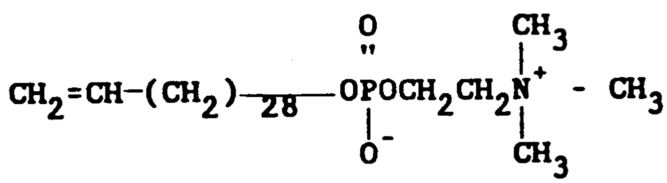

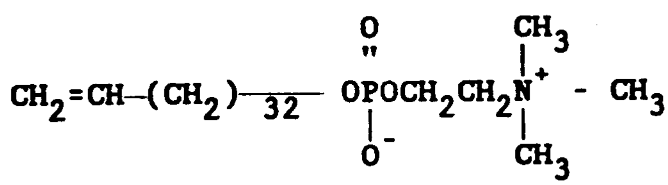

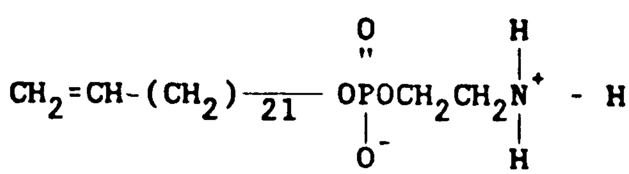

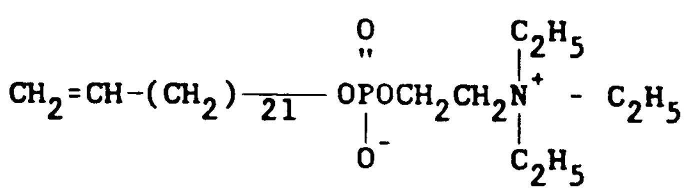

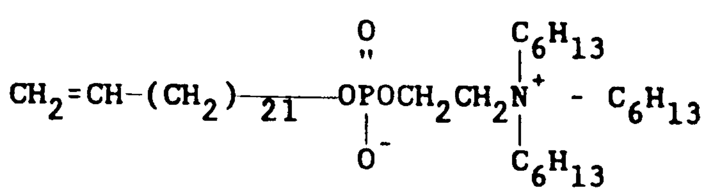

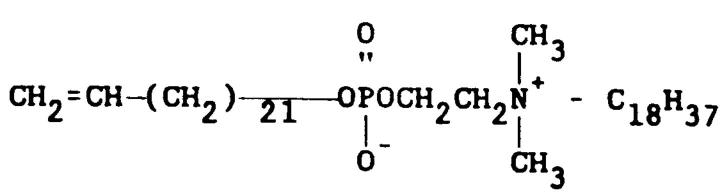

Formula (IV) compounds can be synthesized, for example, by the condensation of an alcohol with the formula $CH_2=CH - (CH_2)_w - OH$ with 2-chloro- 2-oxo-1,3,2-dioxaphospholane over a hydrochloric acid acceptor and by reacting the product with tertiary amine or ammonia.

A hydrosilylation catalyst is required to carry out the hydrosilylation reaction between the alkylhydrogenpolysiloxane and the formula (IV) compound.

Said hydrosilylation catalysts encompass compounds of platinum, ruthenium, rhodium, and palladium, for example, platinum dichloride, chloroplatinic acid, sodium chloroplatinate, platinum/olefin complex salts, platinum/beta-diketone complex salts, platinum/beta-diketoacid ester complex salts, chloroplatinic acid/1,3-divinyl-1,1,3,3-tetramethyldisiloxane complex salts, microparticulate platinum, and finely divided platinum supported on alumina.

While the alkylhydrogenpolysiloxane/formula (IV) compound hydrosilylation reaction can be run by directly reacting both compounds, where possible they may be dissolved in a common solvent, a suitable amount of hydrosilylation catalyst is added to the solution, and this is then stirred at room temperature or with heating.

Said common solvents are exemplified by toluene, xylene, chloroform, and 1,1,1-trichloroethane. After completion of the reaction, the target compound is obtained by removing the hydrosilylation catalyst and distilling off the organic solvent. Alternatively, the reaction solution is poured into a large quantity of a poor solvent in order to reprecipitate the product, which is then filtered off.

The formula (III) organic group will be directly bonded to those silicon atoms in the starting alkylhydrogenpolysiloxane which had hydrosilyl groups.

Accordingly, formula (III) organic groups will be pendant on the molecular chain when the hydrosilyl groups in the alkylhydrogenpolysiloxane are pendant, and formula (III) organic groups will be present at the molecular chain terminals when the hydrosilyl groups are present at the molecular chain terminals.

The formula (III) organic groups will be present both pendant and at the molecular chain terminals when the hydrosilyl groups are present both pendant on the molecular chain and at the molecular chain terminals.

This invention's organopolysiloxanes are generally solids and occasionally liquids at room temperature. The presence of the formula (III) organic group generates hygroscopicity and hydrophilicity when its concentration is high.

Liquid crystallinity appears at large values of n in the formula (III) organic group.

The presence of the phospholipid-like formula (III) organic group also confers biocompatibility.

Furthermore, when 3 or more hydrosilyl groups are present in each molecule, an elastomer can be formed by self-crosslinking in the presence of a condensation catalyst. An elastomer can also be formed from mixtures of the compound having 2 or more hydrosilyl groups in the molecule with curing catalyst and organopolysiloxane having two or three or more silanol or vinyl groups in each molecule.

The present invention's organopolysiloxane containing a phospholipid-like structure is useful in a wide range of applications, such as for liquid crystal displays, artificial visceral organs, ion-exchange membranes, humidity sensors, gas sensors, biosensors, etc.

The following examples illustrate several of the specific embodiments of the invention. The examples are presented to help those skilled in the art to better understand the extent and scope of the instant invention as defined in the claims in light of this application.

In the examples and reference examples, IR refers to the infrared absorption spectrum.

Reference Example 1

Synthesis of 22-tricosenyl 2-(trimethylammonio)ethyl phosphate

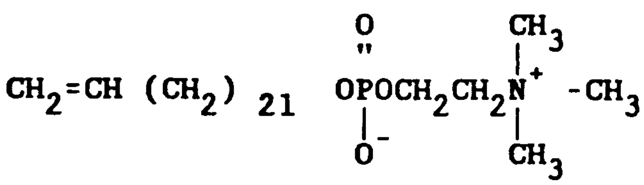

Herein, 3.38 g 22-tricosenyl alcohol (0.010 mol) was dissolved in 150 ml dry tetrahydrofuran, 1.21 g triethylamine (0.012 mol) was added, and after cooling to -5 ° C, 1.74 g 2-chloro-2-oxo-1,3,2-dioxaphospholane (0.012 mol) was added dropwise over 30 minutes with stirring.

After the completion of addition, the reaction was continued at 5 to 10 ° C with stirring for 2 hours, the

precipitated triethylamine hydrochloride was then filtered off, and the filtrate was concentrated under reduced pressure to remove the tetrahydrofuran. The residual liquid was combined with 100 ml dimethylformamide and 2.95 g trimethylamine (0.050 mol), and this was placed in a pressure-resistant glass bottle, sealed, and then reacted at 75 °C for 36 hours with shaking.

The dimethylformamide was then distilled off in vacuo. The product, a viscous liquid, was dissolved in 5 ml methanol, which was then poured into a large volume of diethyl ether to obtain a white precipitate.

The white precipitate was collected on a glass filter and then dried in vacuo to obtain a white powder.

This white powder was subjected to IR analysis, and the presence of the following was confirmed: methylene (2925 $cm^{-1}$ 2850 $cm^{-1}$, and 1450 $cm^{-1}$), vinyl (1620 $cm^{-1}$), P = O (1230 $cm^{-1}$), and (P = O)-$CH_2$-(1040 $cm^{-1}$ and 930 $cm^{-1}$).

$^1$H-NMR examination of the white powder confirmed the presence of the following:

-$CH_2$-( =1.3, 6 OH), C=C-$CH_2$ (δ = 1.9, 2H)
$N^+$ - $CH_3$ (δ = 3.4, 9H), $N^+$ - $CH_2$ (δ = 3.8, 2H)
O-$CH_2$ ( δ= 4.0, 4H), H-C=C (δ = 4.9, 1H)
H-C=C-H (δ = 5.6, 1H), =C-H (δ = 5.9, 1H)
C

This white powder was thus confirmed to be 22-tricosenyl 2-(trimethylammonio)ethyl phosphate.

Reference Example 2

Synthesis of 28-nonacosenyl 2-(trimethylammonio)ethyl phosphate

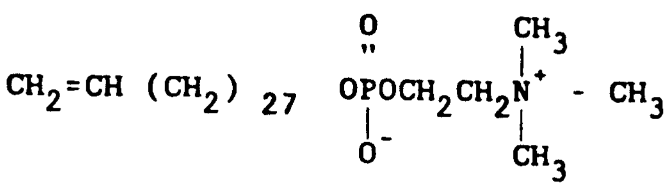

Herein, 4.22 g 28-nonacosenyl alcohol (0.010 mol) was dissolved in 150 ml dry tetrahydrofuran, 1.21 g triethylamine (0.012 mol) was added, and after cooling to -5 °C, 1.74 g 2-chloro-2-oxo-1,3,2-dioxaphospholane (0.012 mol) was added dropwise over 30 minutes with stirring.

After the completion of addition, the reaction was continued at 5 to 10 °C with stirring for 2 hours, the precipitated triethylamine hydrochloride was then filtered off, and the filtrate was concentrated under reduced pressure to remove the tetrahydrofuran. The residual liquid was combined with 100 ml dimethylformamide and 2.95 g trimethylamine (0.050 mol), and this was placed in a pressure-resistant glass bottle, sealed, and then reacted at 75 degrees Centigrade for 36 hours with shaking.

The dimethylformamide was then distilled off in vacuo. The product, a viscous liquid, was dissolved in 5 ml methanol, which was then poured into a large volume of diethyl ether to obtain a white precipitate.

The white precipitate was collected on a glass filter and then dried in vacuo to obtain a white powder.

This white powder was subjected to IR analysis, and the presence of the following was confirmed: methylene (2925 $cm^{-1}$ 2850 $cm^{-1}$, and 1450 $cm^{-1}$), vinyl (1620 $cm^{-1}$), P = O (1230 $cm^{-1}$), and (P = O)-$CH_2$-(1040 $cm^{-1}$ and 930 $cm^{-1}$).

$^1$H-NMR examination of the white powder confirmed the presence of the following.

$-CH_2-$ (δ = 1.3, 6 OH), $C{=}C{-}CH_2$ (δ = 1.9, 2H)
$N^{+}-CH_3$ (δ = 3.4, 9H), $N^{+}-CH_2$ (δ = 3.8, 2H)
$O{-}CH_2$ (δ = 4.0, 4H), H-C=C (δ = 4.9, 1H)
H-C=C-H (δ = 5.6, 1H), =C(-C)-H (δ = 5.9, 1H)

This white powder was thus confirmed to be 28-nonacosenyl 2- (trimethylammonio)ethyl phosphate.

Reference Example 3

Synthesis of 10-undecenyl 2-(trimethylammonio)ethyl phosphate

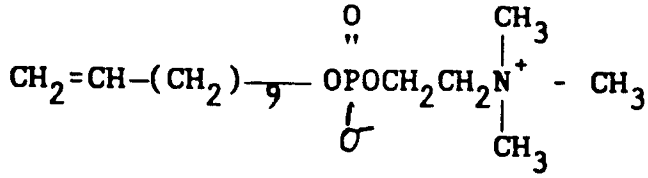

Herein, 7.60 g 10-undecen-1-ol (0.0451 mol) was dissolved in 200 ml dry tetrahydrofuran, 6.85 g triethylamine (0.0670 mol) was added, and after cooling to -20 ° C, 7.85 g 2-chloro-2-oxo-1,3,2-dioxaphospholane (0.0540 mol) was added dropwise over 30 minutes with stirring.

After the completion of addition, the reaction was continued at 5 ° C with stirring for 2 hours, the precipitated triethylamine hydrochloride was then filtered off, and the filtrate was concentrated under reduced pressure to remove the tetrahydrofuran. The residual liquid was combined with 150 ml dimethylformamide and 5.00 g trimethylamine (0.0847 mol), and this was placed in a pressure-resistant glass bottle, sealed, and then reacted at 75 ° C for 20 hours with shaking.

The dimethylformamide was then distilled off in vacuo. The product, a viscous liquid, was dissolved in 5 ml methanol, which was then poured into a large volume of diethyl ether to obtain a white precipitate.

The white precipitate was collected on a glass filter and then dried in vacuo to obtain a white powder.

This white powder was subjected to IR analysis, and the presence of the following was confirmed: methylene (2925 $cm^{-1}$ 2850 $cm^{-1}$, and 1450 $cm^{-1}$), vinyl (1620 $cm^{-1}$), P = O (1230 $cm^{-1}$), and (P = O)-$CH_2$-(1040 $cm^{-1}$ and 930 $cm^{-1}$).

$^1$H-NMR examination of the white powder confirmed the presence of the following.

$-CH_2-$ (δ = 1.3, 6 OH), $C{=}C{-}CH_2$ (δ = 1.9, OH)
$N^{+}-CH_3$ (δ = 3.4, 9H), $N^{+}-CH_2$ (δ = 3.8, 2H)
$O{-}CH_2$ (δ = 4.0, 4H), H-C=C (δ = 4.9, 1H)
H-C=C-H (δ = 5.6, 1H), =C(-C)-H (δ = 5.9, 1H)

This white powder was thus confirmed to be 10-undecenyl 2-(trimethylammonio)ethyl phosphate.

Example 1

Herein, 0.0503 g (0.159 x $10^{-4}$ mol) methylhydrogenpolysiloxane with the formula

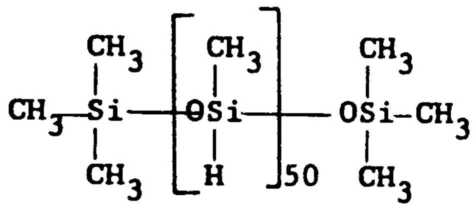

and 0.4000 g (7.94 x $10^{-4}$ mol) 22-tricosenyl 2-(trimethylammonio)ethyl phosphate from Reference Example 1 were dissolved in 30 ml warm toluene. Chloroplatinic acid was also added to and dissolved in this toluene solution at the rate of 220 to 275 micromoles/l. The resulting solution was placed in a pressure-resistant glass bottle, which was sealed and immersed in a water bath at 80 ° C for 24 hours in order to carry out a hydrosilylation reaction. Upon completion of the reaction, the contents were removed and poured into a large excess of acetone for reprecipitation. The precipitate was filtered off and dried.

The product was a white, very slightly hygroscopic solid. IR analysis of this product provided the following results: disappearance of vinyl (1670 $cm^{-1}$) and hydrosilyl (2240 $cm^{-1}$); presence of methylene (2925 $cm^{-1}$, 2850 $cm^{-1}$, and 1460 $cm^{-1}$), P = O (1200 $cm^{-1}$), and (P = O)-$CH_2$-(1060 $cm^{-1}$).

The product was thus a polysiloxane with the formula

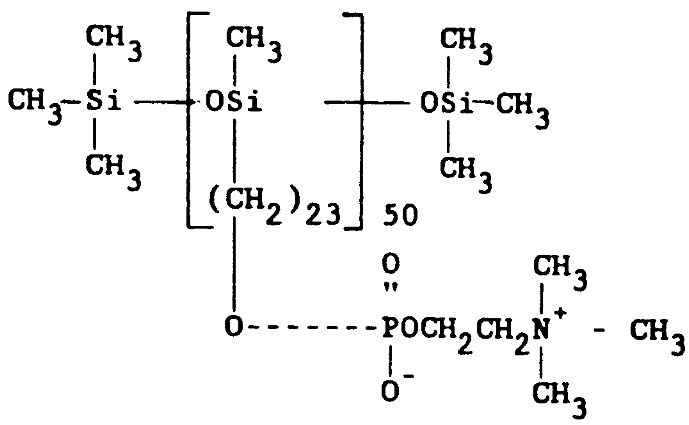

that is, a trimethylsiloxy-terminated methyl[(trimethylammonium)ethylphosphatidyltricosyl]polysiloxane.

When the product's thermal changes were examined under a polarizing microscope, it was found to be a nematic liquid crystal in the temperature interval of 25 to 195 ° C.

Example 2

Herein, 0.111 g (0.173 x $10^{-4}$ mol) methylhydrogenpolysiloxane with the formula:

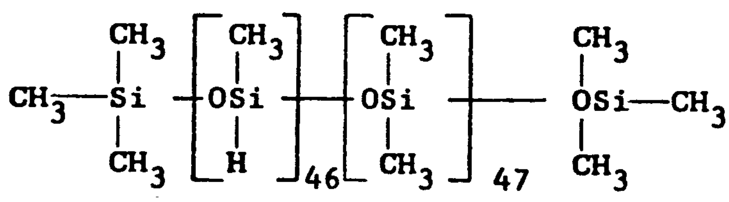

and 0.399 g (7.94 x $10^{-4}$ mol) 22-tricosenyl 2-(trimethylammonio)ethyl phosphate from Reference Example 1 were dissolved in 30 ml warm toluene, and chloroplatinic acid was also added to and dissolved in the toluene solution at a ratio of 220 to 275 micromoles/l. The resulting solution was placed in a pressure-resistant glass bottle, which was then sealed and immersed in a water bath at 80 ° C for 24 hours in order to carry out a hydrosilylation reaction.

After completion of the reaction, the contents were removed and poured into a large excess of acetone for reprecipitation. The precipitate was filtered off and dried.

The product was a white, very slightly hygroscopic solid. IR analysis of this product provided the following results: disappearance of vinyl (1670 $cm^{-1}$) and hydrosilyl (2240 $cm^{-1}$); presence of methylene (2925 $cm^{-1}$, 2850 $cm^{-1}$, and 1460 $cm^{-1}$), P = O (1200 $cm^{-1}$), and (P = O)-$CH_2$- (1060 $cm^{-1}$).

The product was thus a polysiloxane with the formula

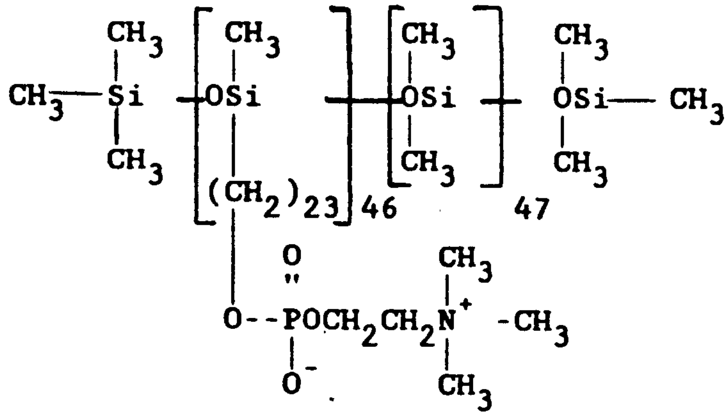

that is, a trimethylsiloxy-terminated methyl[(trimethylammonium)ethylphosphatidyltricosyl]siloxane-dimethylsiloxane copolymer. The product's thermal changes were examined under a polarizing microscope, and it was confirmed to be a nematic liquid crystal in the temperature interval of 83 to 185 ° C.

Example 3

Herein, 0.0503 g (0.159 x $10^{-4}$ mol) methylhydrogenpolysiloxane as used in Example 1 and 0.466 g (7.94 x $10^{-4}$ mol) 28-nonacosenyl 2-(trimethylammonio)ethyl phosphate from Reference Example 2 were dissolved in 30 ml warm toluene, and chloroplatinic acid was also added to and dissolved in the toluene solution at a ratio of 220 to 275 micromoles/l. The obtained solution was placed in a pressure-resistant glass bottle, which was sealed and immersed in a water bath at 80 degrees Centigrade for 24 hours in order to carry out a hydrosilylation reaction. After completion of the reaction, the contents were removed and poured into a large excess of acetone for reprecipitation. The precipitate was then filtered off and dried.

The product was a white, very slightly hygroscopic solid. IR analysis of this product provided the following results: disappearance of vinyl (1670 $cm^{-1}$) and hydrosilyl (2240 cm-1); presence of methylene (2925 $cm^{-1}$, 2850 $cm^{-1}$, and 1460 $cm^{-1}$), P = O (1200 $cm^{-1}$), and (P = O)-$CH_2$- (1060 $cm^{-1}$). The product was thus a polysiloxane with the formula:

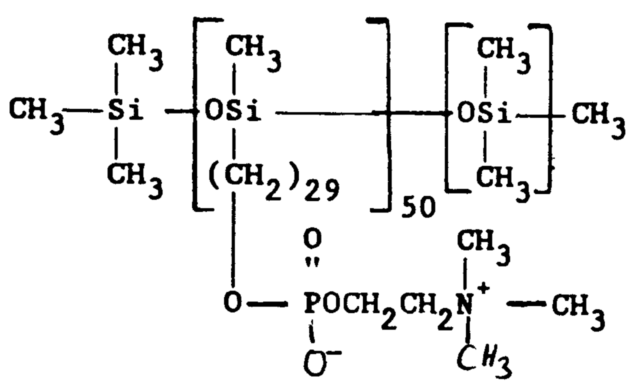

that is, a trimethylsiloxy-terminated methyl[(trimethylammonium)ethylphosphatidylnonacosyl]polysiloxane.

This product's thermal changes were examined under a polarizing microscope, and it was confirmed to be a nematic liquid crystal in the temperature interval of 20 to 209 ° C.

Example 4

Herein, 0.111 g (0.173 x $10^{-4}$ mol) methylhydrogenpolysiloxane as used in Example 2 and 0.466 g (7.94 x $10^{-4}$ mol) 28-nonacosenyl 2-(trimethylammonio)ethyl phosphate from Reference Example 2 were dissolved in 30 ml warm toluene, and chloroplatinic acid was also added to and dissolved in this toluene solution at a ratio of 220 to 275 micromoles/l. The obtained solution was placed in a pressure-resistant class bottle, which was then sealed and immersed in a water bath a 80 ° C for 24 hours in order to carry out a

hydrosilylation reaction.

After completion of the reaction, the contents were removed and poured into a large excess of acetone for reprecipitation. The precipitate was filtered off and dried.

The product was a white, very slightly hygroscopic solid. IR analysis of this product provided the following results: disappearance of vinyl (1670 $cm^{-1}$) and hydrosilyl (2240 $cm^{-1}$); presence of methylene (2925 $cm^{-1}$, 2850 $cm^{-1}$, and 1460 $cm^{-1}$), P = O (1200 $cm^{-1}$), and (P = O)-$CH_2$- (1060 $cm^{-1}$).

The product was thus a polysiloxane with the formula:

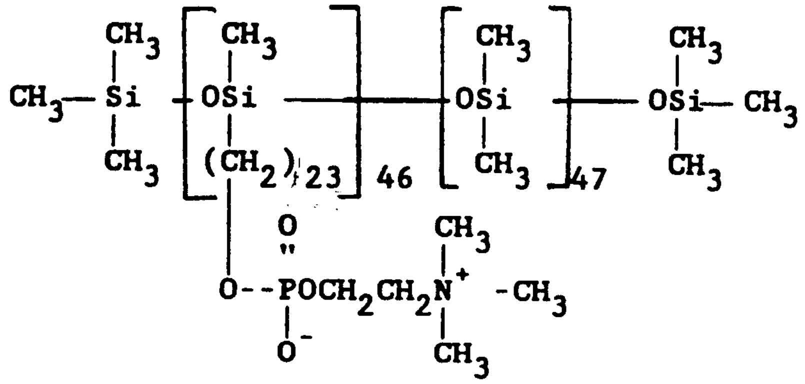

that is, a trimethylsiloxy-terminated methyl[(trimethylammonium)ethylphosphatidylnonacosyl]siloxane - dimethylsiloxane copolymer.

The product's thermal changes were examined under a polarizing microscope, and it was found to be a nematic liquid crystal in the temperature interval of 75 to 198 ° C.

Example 5

Herein, 0.0476 g (1.99 x $10^{-4}$ mol) methylhydrogenpolysiloxane with the formula:

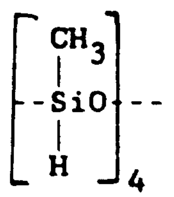

and 0.133 g (3.97 x $10^{-4}$ mol) 10-undecenyl 2-(trimethylammonio)ethyl phosphate from Reference Example 3 were dissolved in 30 ml warm toluene, and chloroplatinic acid was also added to and dissolved in this toluene solution at a ratio of 220 to 275 micromoles/l. The obtained solution was placed in a pressure-resistant glass bottle, which was then sealed and immersed in a water bath for 20 hours at 75 ° C in order to carry out the hydrosilylation reaction.

After completion of the reaction, the contents were removed and poured into a large excess of acetone for reprecipitation. The precipitate was filtered off and dried.

The product was a white, very slightly hygroscopic solid. IR analysis of this product provided the following results: disappearance of vinyl (1670 $cm^{-1}$); hydrosilyl (2240 $cm^{-1}$) reduced by half; presence of methylene (2925 $cm^{-1}$, 2850 $cm^{-1}$,and 1460 $cm^{-1}$), P = O (1200 $cm^{-1}$), and (P = O)-$CH_2$- (1060 $cm^{-1}$).

Dibutyltin dilaurate (1 wt% on product) was added to and mixed with a toluene solution of the product (1 wt% solids), resulting in condensation with the evolution of hydrogen gas. The product was thus a polysiloxane with the formula:

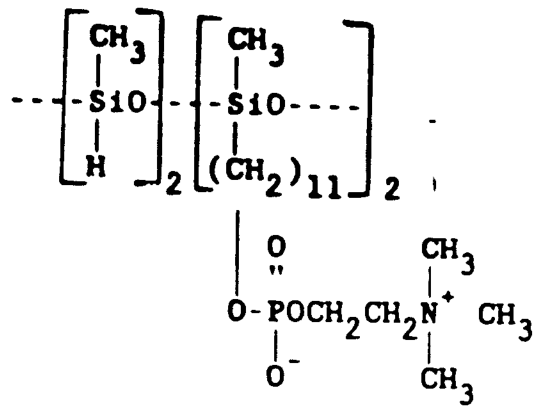

that is, a tetramethyldi[(trimethylammonium)ethylphosphatidylundecyl]dihydrogencyclo-tetrasiloxane.

Example 6

Herein, 0.0617 g (0.195 x $10^{-4}$ mol) methylhydrogenpolysiloxane with the formula:

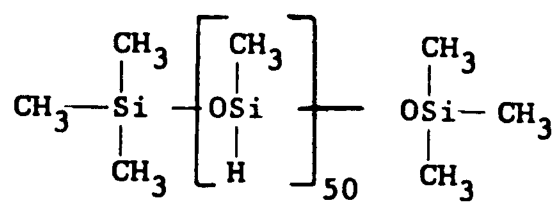

and 0.228 g (6.81 x $10^{-4}$ mol) 10-undecenyl 2-(trimethylammonio)ethyl phosphate from Reference Example 3 were dissolved in 30 ml warm toluene, and chloroplatinic acid was added to and dissolved in this toluene solution at a ratio of 220 to 275 micromoles/l. The obtained solution was placed in a pressure-resistant glass bottle, which was then sealed and immersed in a water bath at 75 ° C for 60 hours in order to carry out the hydrosilylation reaction.

After completion of the reaction, the contents were removed and poured into a large excess of acetone for reprecipitation. The precipitate was filtered off and dried.

The product was a white, very slightly hygroscopic solid. IR analysis of this product gave the following results: disappearance of vinyl (1670 $cm^{-1}$); ca. 70% reduction in hydrosilyl (2240 $cm^{-1}$); presence of methylene (2925 $cm^{-1}$, 2850 $cm^{-1}$, and 1460 $cm^{-1}$), P=O (1200 $cm^{-1}$), and (P=O)-$CH_2$- (1060 $cm^{-1}$). When dibutyltin dilaurate (1 wt% on product) was added to and mixed with the product's toluene solution (1 wt% solids), condensation occurred with the evolution of hydrogen gas. The product was thus a polysiloxane with the formula:

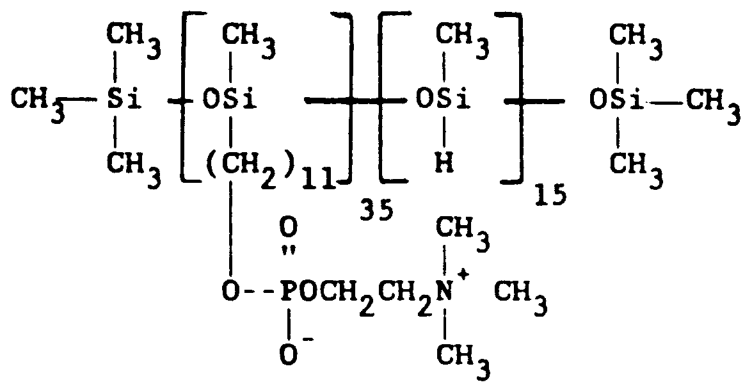

that is, a trimethylsiloxy-terminated methyl[(trimethylammonium)ethylphosphatidylundecyl]siloxane-methylhydrogensiloxane copolymer.

Example 7

Herein, 0.347 g (3.97 x $10^{-4}$ mol) methylhydrogenpolysiloxane with the formula:

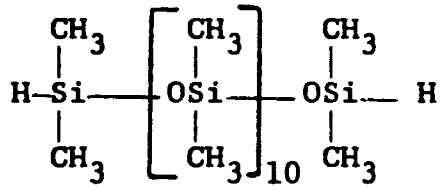

and 0.400 g (7.94 x $10^{-4}$ mol) 22-tricosenyl 2-(trimethylammonio)ethyl phosphate from Reference Example 1 were dissolved in 30 ml warm toluene, and chloroplatinic acid was also added to and dissolved in this toluene solution at a ratio of 220 to 275 micromoles/l. The resulting solution was placed in a pressure-resistant glass bottle, which was then sealed and immersed in a water bath at 80 ° C for 24 hours in order to carry out a hydrosilylation reaction. After completion of the reaction, the contents were removed and poured into a large excess of acetone for reprecipitation. The precipitate was filtered off and then dried. The product was a white, very slightly hygroscopic solid. IR analysis of this product provided the following results: disappearance of vinyl (1670 $cm^{-1}$) and hydrosilyl (2240 $cm^{-1}$); presence of methylene (2925 $cm^{-1}$, 2850 $cm^{-1}$, and 1460 $cm^{-1}$), P = O (1200 $cm^{-1}$), and (P = O)-$CH_2$-(1060 $cm^{-1}$).

The product was thus a polysiloxane with the formula

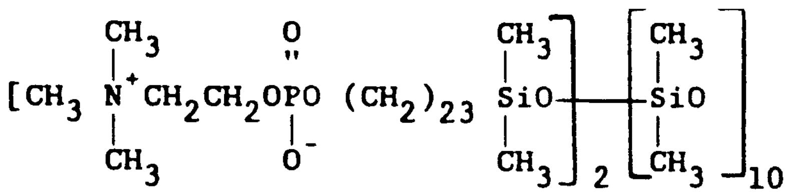

that is, a dimethyl[(trimethylammonium)ethylphosphatidyltricosyl]siloxy- terminated dimethylpolysiloxane.

**Claims**

**1.** Organopolysiloxanes, containing a phospholipid-like structure, wherein the organopolysiloxanes are selected from siloxanes having the general formula

(I) 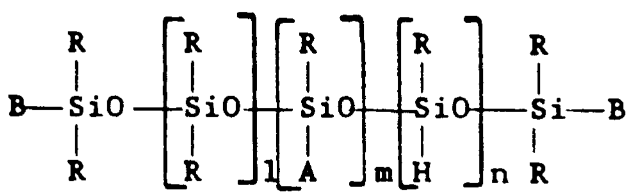 and

(II) 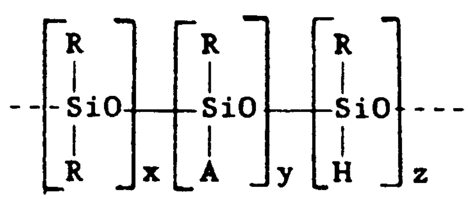

wherein each R is an alkyl radical; A is an organic group having the general formula

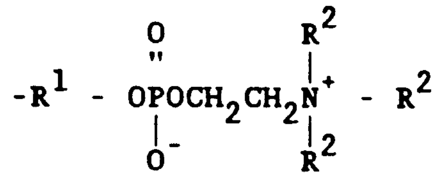

wherein $R^1$ is an alkylene group containing 3 to 50 carbon atoms and $R^2$ is selected from hydrogen atoms or an alkyl group containing 1 to 25 carbon atoms; B is selected from the group R, hydrogen atoms, or the group A; l, m, and n each have a value of zero or an integer having a value of at least one, with the proviso that l + m + n is an integer having a value of 0 to 2,000; x and z are each zero or an integer of at least one; y is an integer of at least 1, with the proviso that x + y + z is an integer having a value of 3 to 20, and with the further proviso that there is at least one group containing A in each molecule.

**2.** A process for the preparation of organopolysiloxanes of claim 1, the process comprising contacting a compound having the formula (IV)

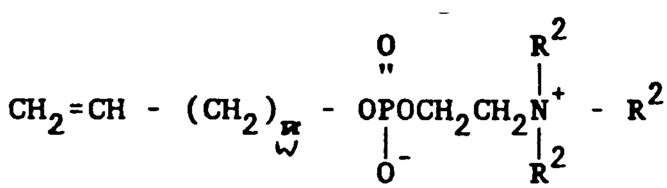 (IV)

with an organohydrogenpolysiloxane having at least one hydrogen bonded to silicon in each molecule, in the presence of a hydrosilylation catalyst, wherein w has a value of 1 to 48 and $R^2$ is defined as in claim 1.

**3.** A process as claimed in claim 2, wherein the hydrosilylation catalyst is a platinum compound.

**Patentansprüche**

**1.** Organopolysiloxane enthaltend eine phospholipidartige Struktur, wobei das Organopolysiloxan ausgewählt ist aus Siloxanen mit der allgemeinen Formel

(I) 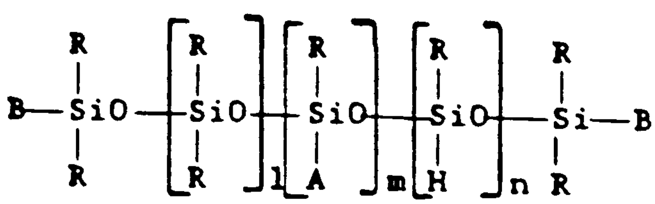 und

(II) 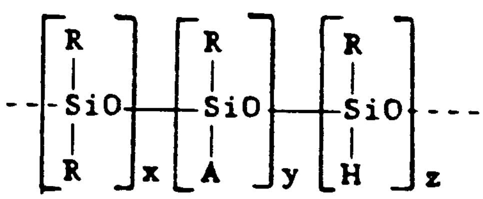

worin jeder Rest R ein Alkylrest ist; A eine organische Gruppe ist mit der allgemeinen Formel

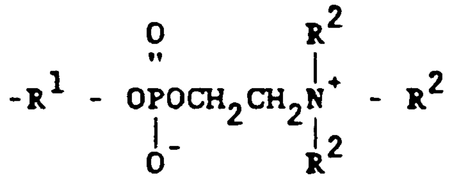

worin $R^1$ eine Alkylengruppe ist, die 3 bis 50 Kohlenstoffatome enthält und $R^2$ ausgewählt ist aus Wasserstoffatomen oder einer Alkylgruppe, die 1 bis 25 Kohlenstoffatome enthält; B ausgewählt ist aus der Gruppe R, Wasserstoffatomen oder der Gruppe A; l, m und n jeweils einen Wert von Null haben oder eine ganze Zahl sind mit einem Wert von mindestens 1, mit dem Vorbehalt, daß l + m + n eine ganze Zahl ist mit einem Wert von 0 bis 2000; x und z jeweils Null sind oder eine ganze Zahl von mindestens 1; y eine ganze Zahl von mindestens 1 ist, mit dem Vorbehalt, daß x + y + z eine ganze Zahl ist mit einem Wert von 3 bis 20 und mit dem weiteren Vorbehalt, daß mindestens eine Gruppe, die A enthält, in jedem Molekül vorhanden ist.

2. Verfahren zur Herstellung von Organopolysiloxanen gemäß Anspruch 1, wobei das Verfahren umfaßt, daß man eine Verbindung mit der Formel IV

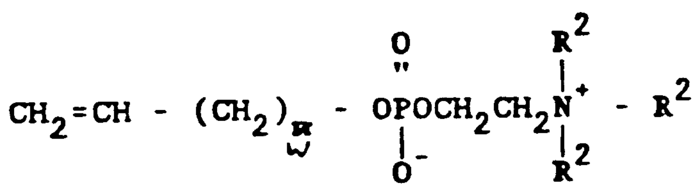 (IV)

und mit einem Organohydrogenpolysiloxan mit mindestens einem an Silicium gebundenen Wasserstoffatom in jedem Molekül in Gegenwart eines Hydrosilylierungskatalysators in Kontakt bringt, wobei w einen Wert von 1 bis 48 hat und $R^2$ wie in Anspruch 1 definiert ist.

3. Verfahren nach Anspruch 2, worin der Hydrosilylierungskatalysator eine Platinverbindung ist.

**Revendications**

1. Organopolysiloxanes contenant une structure de type phospholipidique, dans lesquels les organopolysiloxanes sont choisis parmi les siloxanes répondant à la formule générale

(I) 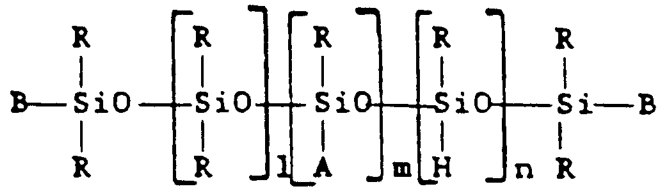 et

(II) 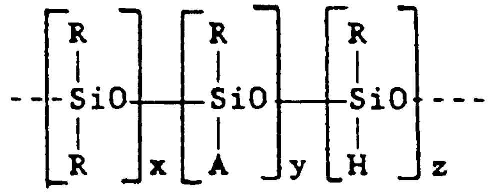

où chaque R est un radical alkyle ; A est un groupe organique répondant à la formule générale

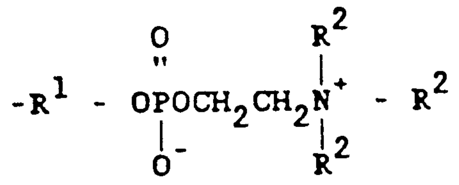

où $R^1$ est un groupe alkylène contenant 3 à 50 atomes de carbone et $R^2$ est choisi parmi des atomes d'hydrogène ou un groupe alkyle contenant 1 à 25 atomes de carbone ; B est choisi parmi le groupe R, des atomes d'hydrogène ou le groupe A ; l, m et n sont chacun zéro ou un nombre entier ayant une valeur d'au moins un, avec la condition que $l + m + n$ soit un nombre entier ayant une valeur de 0 à 2000 ; x et z sont chacun zéro ou un nombre entier valant au moins un ; y est un nombre entier valant au moins 1, avec la condition que $x + y + z$ soit un nombre entier ayant une valeur de 3 à 20, et avec la condition supplémentaire qu'il y ait au moins un groupe contenant A dans chaque molécule.

**2.** Un procédé pour la préparation d'organopolysiloxanes de la revendication 1, le procédé consistant à mettre en contact un composé répondant à la formule (IV)

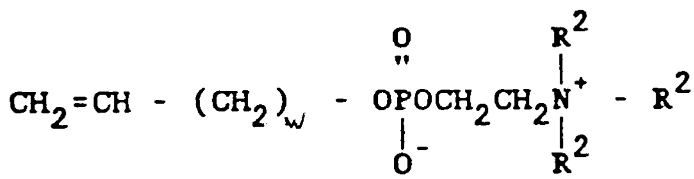 (IV)

avec un organohydrogénopolysiloxane ayant au moins un atome d'hydrogène lié au silicium dans chaque molécule, en présence d'un catalyseur d'hydrosilylation, w ayant une valeur de 1 à 48 et $R^2$ étant tel que défini dans la revendication 1.

**3.** Un procédé tel que revendiqué dans la revendication 2, dans lequel le catalyseur d'hydrosilylation est un composé du platine.